# EUROPEAN PATENT APPLICATION

(11) **EP 4 481 544 A1**
(43) Date of publication of application: **25.12.2024**
(21) Application number: 23770939.9
(22) Date of filing: 05.01.2023
(51) Int. Cl.: G06F 3/044, G06F 11/34, G06F 9/451, G06V 40/13

(54) **ELECTRONIC DEVICE AND TOUCH GUIDE METHOD**

(30) Priority: 16.03.2022 KR 20220032969
(71) Applicant: Samsung Electronics Co., Ltd., Suwon-si, Gyeonggi-do 16677 (KR)
(72) Inventor: KIM, Hyeonho, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2023/000240
(87) International publication number: WO 2023/177059

(57) **Abstract**

An electronic device according to various embodiments may comprise a display, a fingerprint sensor, a memory, and a processor operatively connected to the display, the fingerprint sensor, and the memory, wherein the processor is configured to: receive a user's touch input on the display; acquire a fingerprint for the touch input by using the fingerprint sensor; if the fingerprint for the touch input cannot be recognized, determine that fingerprint recognition has failed; in response to recognition of the fingerprint for the touch input, if a fingerprint stored in the memory and the fingerprint for the touch input match, determine a fingerprint match; if a fingerprint stored in the memory and the fingerprint for the touch input do not match, determine a fingerprint mismatch; and generate a touch history by mapping the touch input and a fingerprint recognition result for the touch input, so as to store the touch history in the memory. Various other embodiments are possible.

## Description

### [Technical Field]

This document relates to an electronic device and, for example, to a technology relating to a method of guiding a user on how to make a touch input for the electronic device.

### [Background Art]

With the advance of digital technology, various types of electronic devices such as a mobile communication terminal, a personal digital assistant (PDA), an electronic organizer, a smartphone, a tablet personal computer (PC), and a wearable device are widely used. In order to support and enhance functionality, such electronic devices are continuously being improved in terms of hardware and/or software.

For example, an electronic device is used to capture a photo or a video in place of a camera, make payments for expenses in place of cash or credit cards, protect the device through biometric authentication, or support financial transactions. Biometric authentication is a method of performing authentication through biological tissues, and may use the characteristic of biological tissues unique for each individual. Such biometric authentication may include authentication using various biological tissues including fingerprints, retinas, irises, hands, faces, voice.

### [Disclosure of Invention]

### [Technical Problem]

An electronic device including a display having a fingerprint sensor embedded therein may, for a user's convenience, use biometric authentication as a password, use same to unlock the electronic device, or use same as an authentication means for financial transactions. A conventional electronic device may provide a fingerprint recognition result through an indicator indicating the fingerprint recognition result when fingerprint recognition has succeeded or failed. The conventional electronic device simply notifies, by using the indicator, a user of whether fingerprint recognition has succeeded or failed, and thus fails to provide detailed information of the fingerprint recognition result to the user. For example, the electronic device may fail to provide, to the user, information including whether the user has touched where a fingerprint sensor is not positioned or the user has precisely touched the position of the fingerprint sensor but recognition of the touch has failed.

An aspect of various embodiments of this document is to, when an electronic device needs authentication based on a user's touch input as described above, notify the user of a touched position so as to prevent occurrence of a faulty touch.

### [Solution to Problem]

An electronic device according to various embodiments may include a display, a fingerprint sensor, a memory, and a processor operatively connected to the display, the fingerprint sensor, and the memory, wherein the processor is configured to receive a user's touch input on the display, obtain a fingerprint of the touch input by using the fingerprint sensor, in case that the fingerprint of the touch input is not recognizable, determine a fingerprint recognition failure, in response to recognition of the fingerprint of the touch input, determine a fingerprint match in case that a fingerprint stored in the memory matches the fingerprint of the touch input, and determine a fingerprint mismatch in case that the fingerprint stored in the memory does not match the fingerprint of the touch input, and generate a touch history obtained by mapping the touch input to a fingerprint recognition result for the touch input, and store the touch history in the memory.

A touch guide method of an electronic device according to various embodiments may include receiving a user's touch input on a display, obtaining a fingerprint of the touch input by using a fingerprint sensor, in case that the fingerprint of the touch input is not recognizable, determining a fingerprint recognition failure, in response to recognition of the fingerprint of the touch input, determining a fingerprint match in case that a fingerprint stored in a memory matches the fingerprint of the touch input, and determining a fingerprint mismatch in case that the fingerprint stored in the memory does not match the fingerprint of the touch input, and generating a touch history obtained by mapping the touch input to a fingerprint recognition result for the touch input, and storing the touch history in the memory.

### [Advantageous Effects of Invention]

According to various embodiments, an electronic device may generate a touch history, based on a touch input, and provide a customized touch guide to a user by using the touch history classified into various cases according to each fingerprint recognition result. In addition, an electronic device may accumulate and provide, to a user, positions on which touch inputs are received, among positions based on a fingerprint sensor on a display, thereby providing information on a position that the user needs to touch.

Other effects obtainable or predicted by various embodiments of the electronic device will be directly or implicitly described in detailed description for the embodiments of the electronic device. For example, various effects predicted according to various embodiments of the electronic device will be described in the following detailed description.

### [Brief Description of Drawings]

FIG. 1 is a block diagram of an electronic device in a network environment according to various embodiments;
FIG. 2 is a block diagram of an electronic device according to various embodiments;
FIG. 3 illustrates a fingerprint sensor and a display including multiple cells of an electronic device according to various embodiments;
FIG. 4A illustrates an embodiment that provides a graph as ratios of fingerprint match, fingerprint mismatch, and fingerprint recognition failure having occurred in an electronic device according to various embodiments;
FIG. 4B illustrates an embodiment that provides a graph as usage ratios of fingerprints in a fingerprint match case in an electronic device according to various embodiments;
FIG. 4C illustrates an embodiment that provides a re-registration or removal guide for a fingerprint having a low usage ratio in a fingerprint match case in an electronic device according to various embodiments;
FIG. 5 illustrates an embodiment that indicates a reason why a fingerprint mismatch has occurred according to various embodiments;
FIG. 6A and FIG. 6B illustrate embodiments that indicate a reason why a fingerprint recognition failure has occurred according to various embodiments;
FIG. 7 is a flowchart of a touch method guide of an electronic device according to various embodiments;
FIG. 8 illustrates an embodiment in which an electronic device adaptively displays a fingerprint icon, based on the type and size of a user's fingerprint according to various embodiments;
FIG. 9 illustrates an embodiment that provides a user-customized fingerprint icon of an electronic device according to various embodiments; and
FIGS. 10A, 10B, and 10C illustrate embodiments in which an electronic device adaptively displays a fingerprint icon according to the type and size of a fingerprint according to various embodiments.

### [Mode for the Invention]

Hereinafter, an embodiment of the disclosure will be described in detail with reference to the accompanying drawings.

In describing the embodiments, descriptions related to technical contents which are well-known in the art to which the disclosure pertains, and are not directly associated with the disclosure, will be omitted. Moreover, detailed descriptions related to elements having substantially identical configurations and functions will be omitted.

For the same reason, in the accompanying drawings, some elements may be exaggerated, omitted, or schematically shown, and a size of each element does not precisely reflect the actual size. Accordingly, the disclosure is not restricted by a relative size or interval shown in the accompanying drawings.

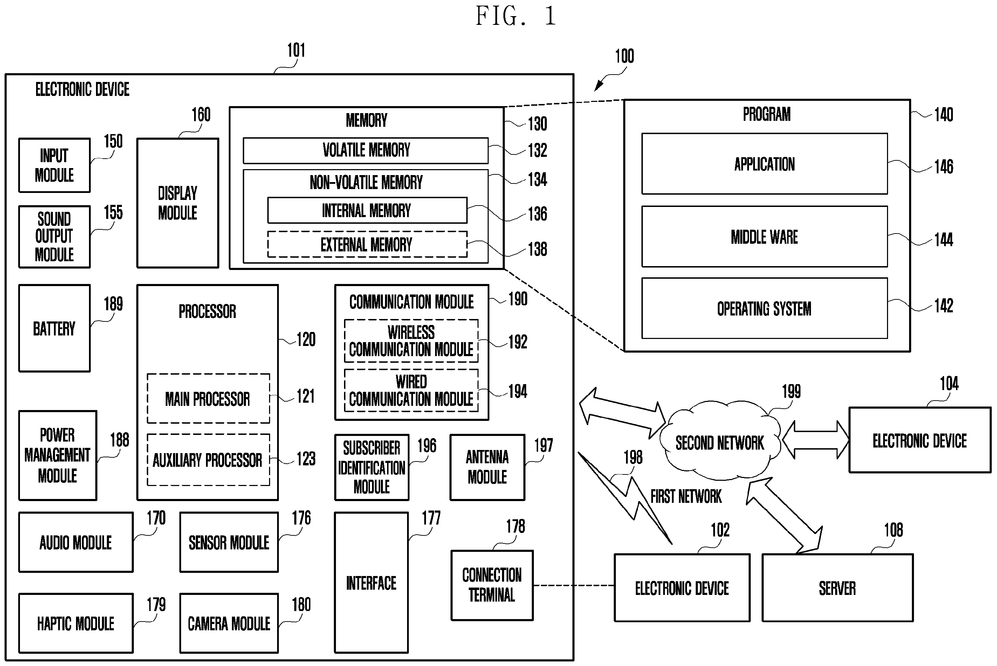

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

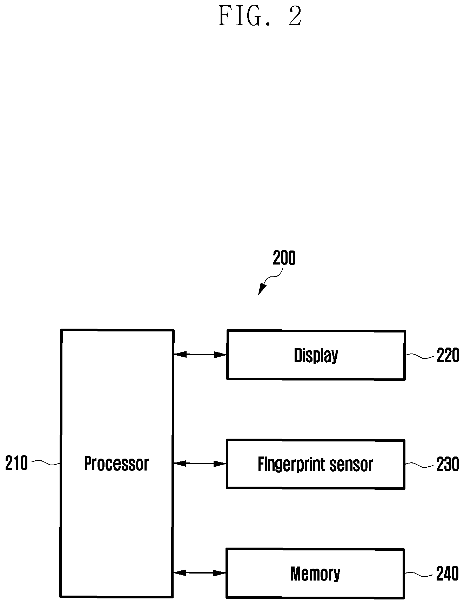

FIG. 2 is a block diagram of an electronic device according to various embodiments.

Referring to FIG. 2, an electronic device 200 may include a display 220, a fingerprint sensor 230, a processor 210, and a memory 240, and in various embodiments, some of the illustrated elements may be omitted or replaced. The electronic device 200 may further include at least some of elements and/or functions of the electronic device 101 in FIG. 1. At least some of the illustrated (not illustrated) elements of the electronic device 200 may be operatively, functionally, and/or electrically connected to each other.

According to various embodiments, the display 220 may display various images according to a control of the processor 210. The display 220 may be implemented as one of a liquid crystal display (LCD), a light-emitting diode (LED) display, a micro LED display, a quantum dot (QD) display, or an organic light-emitting diode (OLED) display, and is not limited thereto. The display 220 may be implemented as a touch screen that detects a touch and/or proximity touch (or hovering) input made by using a part (e.g., a finger) of a user's body or an input device (e.g., a stylus pen). The display 220 may include at least some of elements and/or functions of the display module 160 in FIG. 1.

According to various embodiments, the display 220 may be at least partially flexible, and may be implemented as a foldable display or a rollable display.

According to various embodiments, the fingerprint sensor 230 may obtain a user's fingerprint information. The fingerprint sensor 230 may be implemented as an optical fingerprint sensor capable of obtaining a fingerprint image, but is not limited thereto. For example, the fingerprint sensor 230 may further include various types of fingerprint sensors, such as a capacitive fingerprint sensor that detects the change in capacitance according to the elevation of a fingerprint, or an ultrasonic fingerprint sensor that detects the elevation of a fingerprint by transmitting and receiving ultrasonic waves. Fingerprint information obtained by the fingerprint sensor 230 is stored as image information, and is compared with pre-registered fingerprint information so as to be used for authentication of the electronic device 200. The fingerprint sensor 230 may be disposed on at least one area of a back surface of the display 220 or may be disposed in the display 220. Accordingly, when a touch input using a user's finger occurs on a cover window of the display 220, a touch sensor may obtain touch information and, simultaneously, fingerprint information may be obtained by the fingerprint sensor 230.

According to an embodiment, the fingerprint sensor 230 may obtain fingerprint information by using light emitted from the display 220. The display 220 may function as a light source for operation of the fingerprint sensor 230.

According to an embodiment, the fingerprint sensor 230 may include a CMOS image sensor (CIS), a charge coupled device (CCD) image sensor, a TFT amorphous silicon image sensor, or an organic photodiode (OPD).

According to various embodiments, the memory 240 may include a volatile memory (e.g., the volatile memory 132 in FIG. 1) and a non-volatile memory (e.g., the non-volatile memory 134 in FIG. 1) so as to temporarily or permanently store various data. The memory 240 may include at least some of elements and/or functions of the memory 130 in FIG. 1, and store the program 140 in FIG. 1.

According to various embodiments, the memory 240 may store various instructions executable in the processor 210. Such instructions may include control commands such as arithmetic and logical operations, data transfer, or input/output which are recognizable by the processor 210.

According to various embodiments, the processor 210 may be operatively, functionally, and/or electrically connected to elements (e.g., the display 220, the fingerprint sensor 230, and the memory 240) of the electronic device 200 so as to perform calculation or data processing related to control and/or communication of the elements. The processor 210 may include at least some of elements and/or functions of the processor 120 in FIG. 1.

According to various embodiments, there may be no limit to calculation and data processing functions implementable by the processor 210 on the electronic device 200. However, hereinafter, various embodiments for guiding a user on how to make a touch input for the electronic device 200 will be described. Operations of the processor 210 described later may be performed by loading instructions stored in the memory 240.

According to various embodiments, the processor 210 may store, in the memory 240, a fingerprint to be compared with an input fingerprint. The processor 210 may store a fingerprint corresponding to at least one finger, and then compare an obtained fingerprint with the pre-stored at least one fingerprint to identify whether the fingerprints match each other. According to an embodiment, a maximum number of pre-registered fingerprints storable by the processor 210 may be limited. Hereinafter, a fingerprint pre-registered in the memory 240 is called a registered fingerprint, and a fingerprint obtained based on a touch input is referred to as an input fingerprint. According to an embodiment, information on a registered fingerprint may be stored in a separate secure area (or secure element (SE)) of the memory 240. The number of fingerprints pre-storable by the processor 210 in the memory 240 is not limited thereto.

According to various embodiments, the processor 210 may receive a user's touch input on the display 220. According to an embodiment, the display 220 may include a touch sensor. The touch sensor may receive a touch input on the display 220. The processor 210 may obtain, from the touch sensor (not illustrated), information indicating that a touch input has been received.

According to various embodiments, the processor 210 may obtain an input fingerprint of a touch input by using the fingerprint sensor 230. According to an embodiment, the fingerprint sensor 230 may be embedded in the display 220 (e.g., in-display fingerprint sensor), and may be disposed in an area of the display 220. According to an embodiment, the display 220 may include multiple cell areas, and the fingerprint sensor 230 may be positioned in an area overlapping at least one cell.

According to various embodiments, the processor 210 may collect timestamp information when a fingerprint is input. Timestamp information may include information on a time at which a fingerprint is input. According to an embodiment, the processor 210 may generate various statistics for a user's fingerprint inputting by using timestamp information. For example, the processor 210 may, by using timestamp information, generate a statistic of a time band in which a user uses fingerprint inputting, and generate a statistic of a recent usage frequency. According to an embodiment, the processor 210 may identify the type of lockout. For example, the processor 210 may distinguish between a lockout caused by a 72-hour limitation, and a lockout caused by 5 consecutive failures of fingerprint recognition.

According to various embodiments, the processor 210 may fail to recognize an input fingerprint corresponding to a touch input. For example, when the processor 210 fails to obtain a fingerprint image having a size required for recognizing a fingerprint, the processor 210 may determine that the processor has failed to recognize a fingerprint from the touch input, and determine a fingerprint recognition failure as a result for the touch input. A fingerprint recognition failure may imply that acquisition of a fingerprint image having a required size has failed.

According to an embodiment, the processor 210 may determine a fingerprint recognition failure when a touch input occurs on a part of the fingerprint sensor 230. For example, when a touch input occurs across a cell where the fingerprint sensor 230 is positioned and a cell where the fingerprint sensor 230 is not positioned, the processor 210 may fail to recognize a fingerprint.

According to another embodiment, the processor 210 may determine a fingerprint recognition failure when the size of an area of an image of an obtained input fingerprint is smaller than a size required for comparison with a registered fingerprint stored in the memory 240. The size of an image may indicate one of an amount of image data or a size of the image. The processor 210 may determine, based on the size of a registered fingerprint stored in the memory 240, a minimum size of an input fingerprint required for identifying whether the input fingerprint matches the registered fingerprint. If the size of an input fingerprint is smaller than a determined minimum size, the processor 210 may fail to recognize a fingerprint of a corresponding touch input.

According to another embodiment, the processor 210 may determine a fingerprint recognition failure when an input fingerprint has a lot of noise. For example, when there are many foreign materials covering a finger with which a user touches the display 220 for fingerprint recognition, the processor 210 may obtain a fingerprint image having a resolution lower than a resolution required for performing fingerprint recognition. When an image having a low resolution is obtained, the processor 210 may determine a fingerprint recognition failure for a corresponding touch input.

According to another embodiment, the processor 210 may determine a fingerprint recognition failure when a finger touching the display 220 is wet. For example, when there is water on a finger with which a user touches the display 220 for fingerprint recognition, the processor 210 may fail to obtain a clean fingerprint image. When an image having a low resolution is obtained, the processor 210 may determine a fingerprint recognition failure for a corresponding touch input.

According to another embodiment, the processor 210 may determine a fingerprint recognition failure when the ridges and valleys of an input fingerprint are undistinguishable. For example, when a user puts a finger on the display 220 too lightly or does not sufficiently make contact onto the display with a finger, an image of a fingerprint obtained by the processor 210 is too faint and thus the processor may fail to recognize the ridges and valleys of the fingerprint. According to another embodiment, when a user contacts the display 220 too closely with a finger, an image of a fingerprint obtained by the processor 210 is too dark and thus the processor may fail to recognize the ridges and valleys of the fingerprint. When an obtained image of a fingerprint is too faint or dark, the processor 210 may determine a fingerprint recognition failure for a corresponding touch input.

According to various embodiments, the processor 210 may compare a registered fingerprint stored in the memory 240 with a fingerprint of a touch input. When a fingerprint of a generated touch input is normally obtained, the processor 210 may compare a registered fingerprint with the input fingerprint. For example, the processor 210 may compare a registered fingerprint with an input fingerprint when a touch input occurs in an area overlapping the fingerprint sensor 230, the input fingerprint having a size greater than a minimum size for identifying whether the input fingerprint matches the registered fingerprint is obtained, the input fingerprint has no noise, and an image of the input fingerprint that is clear enough to identify ridges and valleys is obtained.

According to various embodiments, when a fingerprint stored in the memory 240 matches a fingerprint of a touch input, the processor 210 may determine a fingerprint match. On the contrary, when a fingerprint stored in the memory 240 differs from a fingerprint of a touch input, the processor 210 may determine a fingerprint mismatch. When a match rate between an input fingerprint and a registered fingerprint is equal to or greater than a predetermined value (e.g., 80 % or greater), the processor 210 may determine that the two fingerprints match. For example, when the processor 210 stored a registered fingerprint, information on the entire area of the fingerprint was stored, but only an area of the registered fingerprint may be received through a currently received touch input. In a case where an image of an area of a registered fingerprint is received, when the processor 210 compares the area of the registered fingerprint corresponding to an input fingerprint with data of the input fingerprint, and a match rate therebetween is equal to or greater than a predetermined value, the processor may determine that the two fingerprints match. On the contrary, when the match rate between the input fingerprint and the registered fingerprint is smaller than the predetermined value, the processor 210 may determine that the two fingerprints do not match.

According to various embodiments, the processor 210 may map information on each case where a fingerprint recognition failure, a fingerprint match, or a fingerprint mismatch has occurred, to information on an area where a corresponding touch has occurred, so as to generate a touch history and store same in the memory 240. Hereinafter, information on an area where a touch has occurred is described using touch map information. According to an embodiment, touch map information may further include an icon indicating the fingerprint sensor 230. For example, the processor 210 may display an icon indicating the fingerprint sensor 230 in the center of a touch map in order to indicate a position where accumulated touch inputs of a user are input, based the fingerprint sensor 230. According to an embodiment, the processor 210 may generate a touch history further including a time at which a touch input is received. According to an embodiment, when a fingerprint recognition failure occurs, the processor 210 may generate a touch history including a reason why the fingerprint recognition failure has occurred. For example, when a touch input occurs from a part of the fingerprint sensor 230 and thus fingerprint recognition fails, the processor 210 may generate a touch history by mapping touch map information indicating a position where the touch input has occurred, and a reason indicating that the touch input has occurred from a part of the fingerprint sensor 230 and thus fingerprint recognition has failed.

According to various embodiments, the processor 210 may analyze a characteristic of an input touch input, determine (or estimate) a reason why fingerprint recognition has failed, based on a result of the analysis, and classify, into types, respective reasons why fingerprint recognition failures have occurred. For example, a type in which fingerprint recognition failure occurs may be classified into a first type and a second type, and the processor 210 may generate information on ratios of the first type and the second type among all fingerprint recognition failure cases. According to an embodiment, when a reason for a currently occurred recognition failure is different from the reasons for previously occurred recognition failures, the processor 210 may classify the failure into a new type.

According to various embodiments, when a fingerprint match occurs, the processor 210 may generate a touch history including the type of an input fingerprint, touch map information, and a usage ratio of a fingerprint. For example, when a first fingerprint, a second fingerprint, and a third fingerprint are pre-registered in the memory 240, the processor 210 may determine whether an input fingerprint corresponds to a type among the first fingerprint, the second fingerprint, and the third fingerprint, and generate information on ratios of the fingerprints in a fingerprint match case.

According to various embodiments, the processor 210 may provide a graph for guiding a user on how to touch, based on a generated touch history. According to an embodiment, the processor 210 may execute a predetermined application, based on a user input, and provide a graph for guiding a user how to touch, to an execution screen of the executed application. For example, the processor 210 may connect an external server through communication, and download a predetermined application from the external server, based on a user input. The processor 210 may collect information on a touch method after a user's approval and provide a notification to the display. For example, when a user executes a predetermined application, the processor may provide a notification when a failure rate of touch input recognition is high, and/or at predetermined time intervals. The processor may execute a predetermined application, based on a user input for a notification. The processor 210 may provide a graph by displaying same on the display 220. Hereinafter, the type of a graph that the processor 210 may generate is described. According to an embodiment, the processor 210 may generate a graph, based on ratios at which fingerprint matches, fingerprint mismatches, and fingerprint recognition failures have occurred, based on all accumulated fingerprint recognition attempts. For example, among all attempted fingerprint recognition, a fingerprint match may occur at a first ratio, a fingerprint mismatch may occur at a second ratio, and a fingerprint recognition failure may occur at a third ratio. The processor 210 may generate a graph by mapping fingerprint match to the first ratio, fingerprint mismatch to the second ratio, and fingerprint recognition failure to information on the third ratio, respectively. According to an embodiment, the sum of the first ratio, the second ratio, and the third ratio may be 100%.

According to various embodiments, the processor 210 may generate a graph of classifying reasons why fingerprint recognition has failed, into types in a fingerprint recognition failure case. For example, the processor may generate and provide a graph of mapping a first type, a second type, and a third type to respective ratios at which the types have occurred. According to an embodiment, the processor 210 may display a bar graph having a length proportional to the occurrence ratio of each recognition failure type, and provide a detailed description of a reason why a failure of the type has occurred, based on a user input for the bar graph. For example, the processor 210 may generate a first bar graph having a length proportional to a first ratio at which first type recognition failures have occurred, and a second bar graph having a length proportional to a second ratio at which second type recognition failures have occurred. The processor 210 may provide a description of a reason why a first type recognition failure has occurred, based on a user input for the first bar graph, and provide a description of a reason why a second type recognition failure has occurred, based on a user input for the second bar graph. According to an embodiment, the processor 210 may provide touch map information accumulated for each recognition failure type together. A graph of classifying, into types, reasons why fingerprint recognition has failed, which is providable by the processor 210, is not limited to the above embodiment, and various types of graphs may be provided. For example, the processor 210 may provide a pie chart, based on the occurrence ratios of fingerprint failure types. A pie chart may include multiple figures (e.g., sectors) each having a size (or area) proportional to a ratio at which each failure type occurs.

According to various embodiments, the processor 210 may generate a graph of representing ratios of input fingerprints by types when a fingerprint match occurs. For example, the processor 210 may generate a graph based on a ratio at which each fingerprint is input, among a first fingerprint, a second fingerprint, and a third fingerprint pre-registered in the memory 240. For example, the processor 210 may generate a bar graph having a length proportional to a ratio at which each fingerprint is input. The processor 210 may generate a first bar graph proportional to a ratio at which the first fingerprint is input, a second bar graph proportional to a ratio at which the second fingerprint is input, and a third bar graph proportional to a ratio at which the third fingerprint is input. According to an embodiment, the processor 210 may individually provide touch map information when a corresponding type of fingerprint is used to touch, based on a user input for each bar graph. For example, in a case where a user touches the first bar graph, the processor 210 may provide a first touch map obtained by accumulation when the first fingerprint is input, and in a case where a user touches the second bar graph, the processor may provide a second touch map obtained by accumulation when the second fingerprint is input.

According to various embodiments, when a fingerprint having a usage ratio smaller than a predetermined value (e.g., 10%) is selected, the processor 210 may provide a re-registration or removal guide for the fingerprint. The processor 210 may determine a ratio for determining whether to provide a re-registration or removal guide. According to an embodiment, the processor 210 may provide a re-registration or removal guide, based on a ratio of fingerprint usage among all fingerprint recognition attempts during a predetermined period.

According to various embodiments, the processor 210 may provide a guide for correcting a fingerprint mismatch together with touch map information when the fingerprint mismatch occurs. For example, even though a touch input is received in an area overlapping with the fingerprint sensor 230, when a ratio at which fingerprint mismatches have occurred is high, the processor 210 may determine that a registered fingerprint needs to be updated and guide a user to re-register the fingerprint. On the contrary, when a touch input is received on a position deviating from an area where the fingerprint sensor 230 is located, the processor 210 may guide a user to touch a center part of the fingerprint sensor 230.

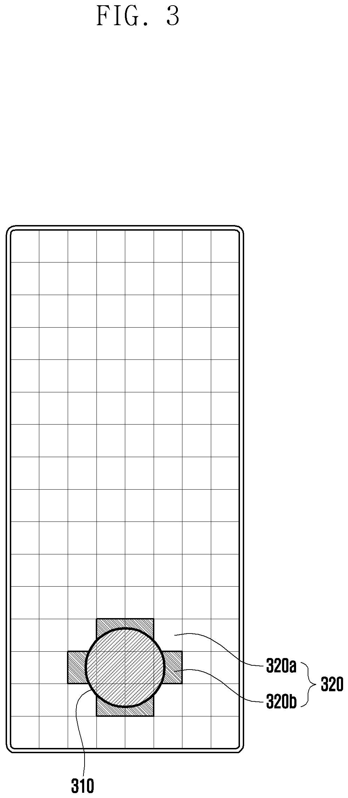

FIG. 3 illustrates a fingerprint sensor and a display including multiple cells of an electronic device according to various embodiments.

Referring to FIG. 3, a fingerprint sensor 310 (e.g., the fingerprint sensor 230 in FIG. 2) may be positioned in an area of a display (e.g., the display 220 in FIG. 2), and multiple cells 320 configuring the display may exist in an area overlapping with the fingerprint sensor 310 or exist in an area not overlapping the fingerprint sensor 310. According to various embodiments, a processor (e.g., the processor 210 in FIG. 2) may identify at least one cell 320 on which a touch input is received. Each cell 320 may be distinguished between a valid cell 320b and an invalid cell 320a according to the size of an area overlapping with the fingerprint sensor 310. The valid cell 320b is a cell having a large area overlapping with the fingerprint sensor 310, and the processor may obtain a fingerprint by using touch information on the valid cell 320b. On the contrary, the invalid cell 320a is a cell having a small area overlapping with the fingerprint sensor 310 or an area not overlapping therewith, and the processor may collect touch information on the invalid cell 320a to use same to identify a valid touch area.

For example, when a touch input is received on both of the invalid cell 320a and the valid cell 320b, the processor may store, in a memory, touch input information received on the invalid cell 320a and the valid cell 320b. The processor may use the touch input information received on the valid cell 320b to obtain information on a fingerprint recognition success area, and may use the touch input information received on the invalid cell 320a to obtain information on a fingerprint recognition failure area (invalid touch area).

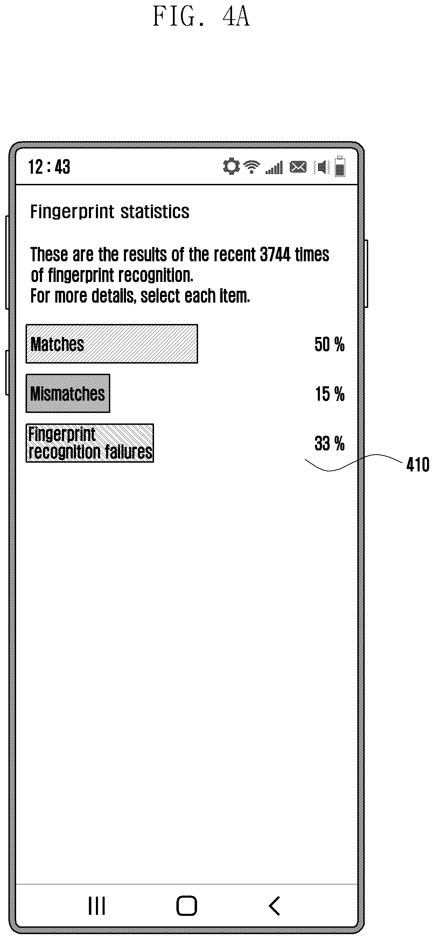

FIG. 4A illustrates an embodiment that provides a graph as ratios of fingerprint match, fingerprint mismatch, and fingerprint recognition failure having occurred in an electronic device according to various embodiments.

According to various embodiments, a processor (e.g., the processor 210 in FIG. 2) may generate a first graph 410 based on ratios at which fingerprint matches, fingerprint mismatches, and fingerprint recognition failures have occurred among all fingerprint recognition attempts. For example, the processor may generate the first graph 410 including a first bar graph having a length proportional to a ratio at which fingerprint matches have occurred, a second bar graph having a length proportional to a ratio at which fingerprint mismatches have occurred, and a third bar graph having a length proportional to a ratio at which fingerprint recognition failures have occurred.

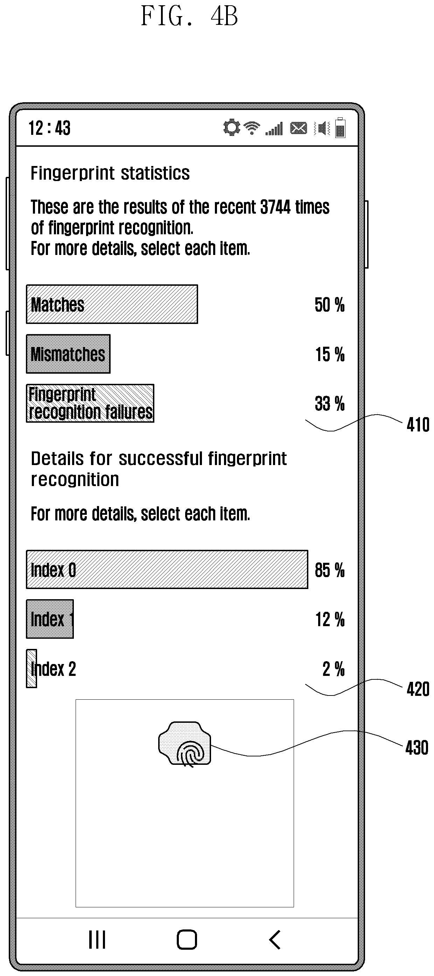

FIG. 4B illustrates an embodiment that provides a graph as usage ratios of fingerprints in a fingerprint match case in an electronic device according to various embodiments.

According to various embodiments, a processor may identify at least one fingerprint registered in a memory (e.g., the memory 240 in FIG. 2), and generate a second graph 420 based on a ratio at which an input fingerprint corresponding to each fingerprint is obtained. For example, the processor may generate the second graph 420 including a fourth bar graph having a length proportional to a ratio at which a first fingerprint is obtained, a fifth bar graph having a length proportional to a ratio at which a second fingerprint is obtained, and a sixth bar graph having a length proportional to a ratio at which a third fingerprint is obtained. According to an embodiment, the processor may display the second graph 420 at one side of the first graph 410.

According to various embodiments, the processor may display an accumulated touch map 430 together with the second graph 420. According to an embodiment, the processor may provide the accumulated touch map 430 for each fingerprint type. For example, the processor may generate a first touch map obtained by accumulating touched areas in a case where the first fingerprint is obtained, a second touch map obtained by accumulating touched areas in a case where the second fingerprint is obtained, and a third touch map obtained by accumulating touched areas in a case where the third fingerprint is obtained. The processor may provide, based on a user input for each bar graph in the second graph 420, the touch map 420 of a fingerprint corresponding thereto.

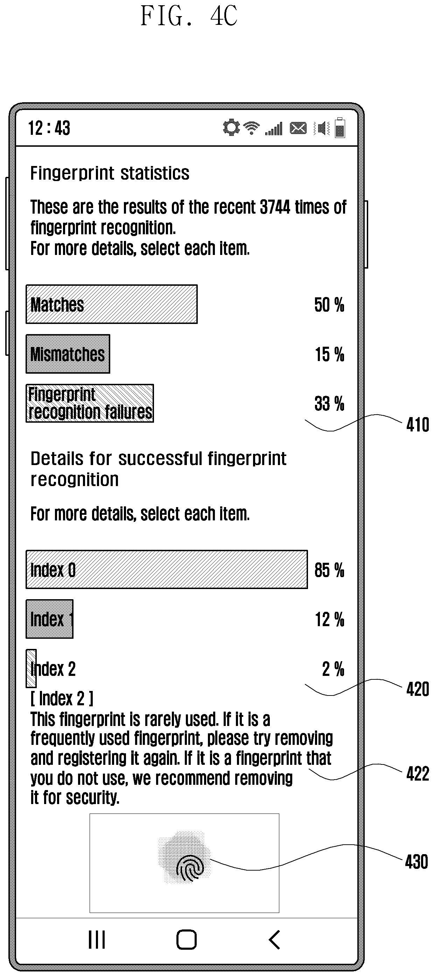

FIG. 4C illustrates an embodiment that provides a re-registration or removal guide for a fingerprint having a low usage ratio in a fingerprint match case in an electronic device according to various embodiments.

According to various embodiments, a processor may provide a re-registration or removal guide 422, based on a ratio at which each fingerprint is used. The processor may provide the removal guide 422 for a fingerprint not used, in order to prevent leakage of biometric information including the fingerprint. For example, if a usage ratio of the third fingerprint is smaller than a predetermined value, the processor may provide the removal guide 422 for the third fingerprint, based on a user input for a bar graph corresponding to the third fingerprint on the second graph 420. The processor may guide a user to re-register a fingerprint that the user rarely uses due to a low recognition rate thereof, so as to increase the recognition rate. For example, when the third fingerprint has a low recognition rate and thus a user rarely uses same, the processor may provide the re-registration guide 422 for the third fingerprint.

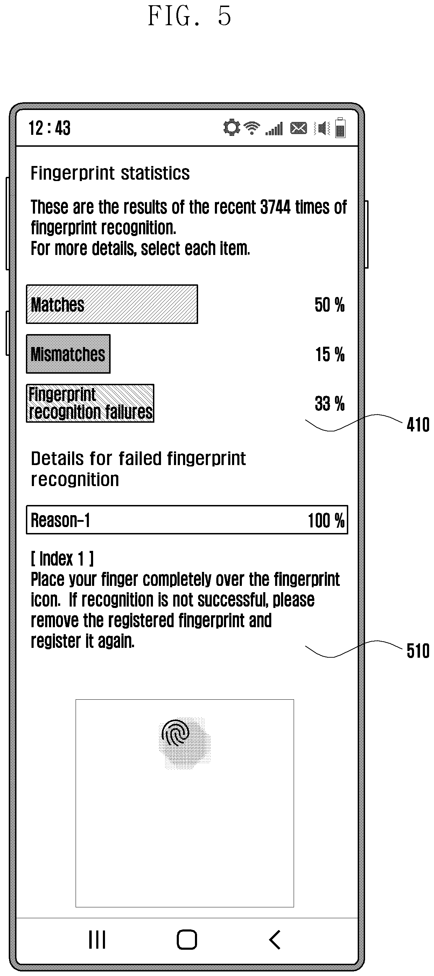

FIG. 5 illustrates an embodiment that indicates a reason why a fingerprint mismatch has occurred according to various embodiments.

Referring to FIG. 5, a processor (e.g., the processor 210 in FIG. 2) may provide a touch map in which touched areas are accumulated in a case where fingerprint mismatches occur. According to an embodiment, the touch map may be displayed below the first graph 410. The more the part of the touch map is touched, the darker the color may be used to display same. According to various embodiments, the processor may provide a guide 510 for increasing a fingerprint recognition rate. The processor may provide the guide 510 based on the touch map.

For example, if a user's touch input occurs while overlapping an area where a fingerprint sensor (e.g., the fingerprint sensor in FIG. 2) is positioned, and a fingerprint mismatch occurs, the processor may provide the guide 510 to re-register a fingerprint. A touch input being properly input in the fingerprint sensor, but not being recognized implies that there is a problem with a registered fingerprint, and thus the processor may use the guide 510 to re-register a fingerprint. The guide 510 which the processor may provide to a user is not limited thereto, and the processor may provide the guide 510 enabling improvement of a recognition rate of a user's touch input by using touch map information.

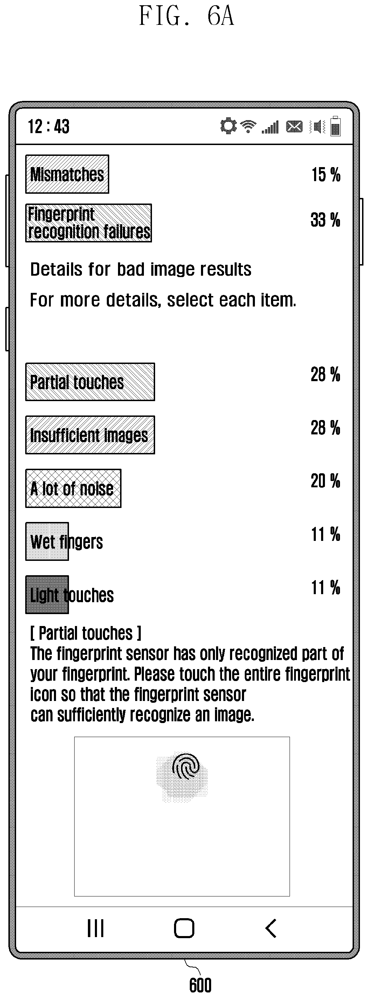

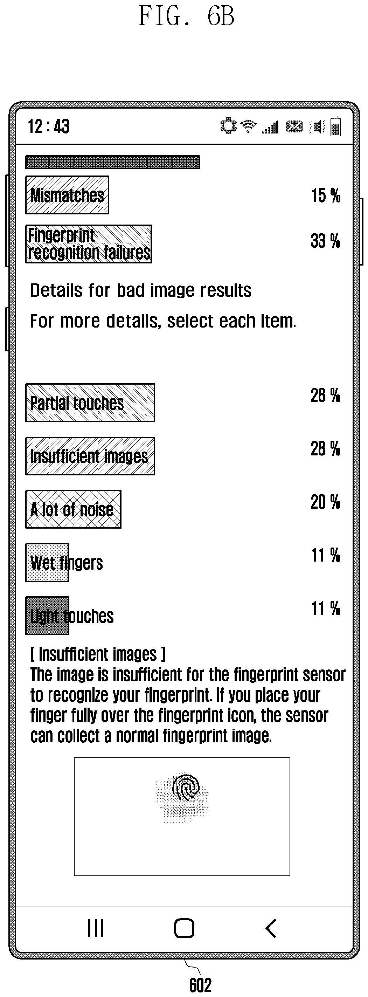

FIG. 6A and FIG. 6B illustrate embodiments that indicate a reason why a fingerprint recognition failure has occurred according to various embodiments.

According to various embodiments, a processor (e.g., the processor 210 in FIG. 2) may provide a guide enabling improvement of a fingerprint recognition rate, when a fingerprint recognition failure occurs. Referring to FIG. 6A and FIG. 6B, the processor may generate a graph of representing, for each types, reasons why fingerprint recognition failures have occurred. For example, fingerprint recognition failures may include at least a first type in which a position where a touch input is received and the position of a fingerprint sensor (e.g., the fingerprint sensor 230 in FIG. 2) only partially overlap with each other, a second type in which an input fingerprint having a size insufficient to be compared with a registered fingerprint is obtained, a third type in which the fingerprint is not clear due to too many foreign materials, a fourth type in which fingerprint recognition has failed due to water on the finger, and a fifth type in which fingerprint recognition has failed due to the finger being in insufficient contact with a display (e.g., the display 220 in FIG. 2).

According to various embodiments, the processor may generate a bar graph based on a ratio at which fingerprint recognition failures of each type have occurred. For example, the processor may generate a graph including a first bar graph having a length proportional to a ratio at which first type fingerprint recognition failures have occurred, a second bar graph having a length proportional to a ratio at which second type fingerprint recognition failures have occurred, a third bar graph having a length proportional to a ratio at which third type fingerprint recognition failures have occurred, a fourth bar graph having a length proportional to a ratio at which fourth type fingerprint recognition failures have occurred, and a fifth bar graph having a length proportional to a ratio at which fifth type fingerprint recognition failures have occurred. According to an embodiment, the processor may display, on each bar graph, a phrase describing fingerprint recognition failure of a corresponding type together.

According to various embodiments, the processor may provide a detailed description of each type, based on a user input for a corresponding bar graph. For example, based on a user input for the first bar graph, the processor may provide a reason why a first type fingerprint recognition failure has occurred, and a guide for resolving the failure. For example, with respect to a first type fingerprint recognition failure, the processor may provide a guide to adjust a position of the display on which a user performs a touch input, together with a touch map. When a user's touch input occurs in an area where the fingerprint sensor is not positioned, the processor may provide the guide 510 to adjust a position of the display (e.g., the display 220 in FIG. 2) which the user touches. For example, when a touch input is biased to the left, based on the fingerprint sensor, the processor may provide the guide 510 for a user to adjust the position of the display which the user touches to the right. A guide which the processor may provide is not limited thereto, and the processor may provide a user-customized guide corresponding to each of various types of fingerprint recognition failures.

An electronic device (e.g., the electronic device 200 in FIG. 2) according to various embodiments may include a display (e.g., the display 220 in FIG. 2), a fingerprint sensor (e.g., the fingerprint sensor 230 in FIG. 2), a memory (e.g., the memory 240 in FIG. 2), and a processor (e.g., the processor 210 in FIG. 2) operatively connected to the display, the fingerprint sensor, and the memory, wherein the processor is configured to receive a user's touch input on the display, obtain a fingerprint of the touch input by using the fingerprint sensor, in case that the fingerprint of the touch input is not recognizable, determine a fingerprint recognition failure, in response to recognition of the fingerprint of the touch input, determine a fingerprint match in case that a fingerprint stored in the memory matches the fingerprint of the touch input, and determine a fingerprint mismatch in case that the fingerprint stored in the memory does not match the fingerprint of the touch input, and generate a touch history obtained by mapping the touch input to a fingerprint recognition result for the touch input, and store the touch history in the memory.

According to various embodiments, the processor may be configured to generate a graph (e.g., the graph 410 in FIG. 3) including information on accumulated touch inputs, based on the touch history, and provide a guide enabling improvement of a recognition rate of a touch input, based on the graph.

According to various embodiments, the processor may be configured to, based on the touch history, generate a graph indicating ratios at which fingerprint matches, fingerprint mismatches, and fingerprint recognition failures have occurred, and output the graph on the display.

According to various embodiments, the processor may be configured to execute a predetermined application, based on a user input, and output the graph on the display, based on a user input for the application.

According to various embodiments, the display may include multiple cells, and the processor may be configured to select at least one cell corresponding to the touch input, and in response to a user's touch input received on the at least one cell, obtain information on an area where the touch input is received.

According to various embodiments, the processor may be configured to map a time at which the touch input is received and the area where the touch input is received, to the fingerprint recognition result, and store the mapped time, area, and result in the memory.

According to various embodiments, the processor may be configured to, in case that a size of the fingerprint of the touch input satisfies a designated condition, determine a fingerprint recognition failure.

According to various embodiments, the processor may be configured to, based on the touch history, in case that a fingerprint recognition result of a touch input is determined as a fingerprint match, identify ratios at which a first fingerprint and a second fingerprint are obtained, and output, on the display, a graph including information on a first ratio at which the first fingerprint is obtained and a second ratio at which the second fingerprint is obtained.

According to various embodiments, the processor may be configured to, based on the touch history, generate a graph of accumulating positions of areas where touch inputs are received, and representing the accumulated positions.

According to various embodiments, the processor may be configured to accumulate positions of areas where touch inputs are received, based on a graphic object indicating the fingerprint sensor, and represent the accumulated positions.

According to various embodiments, the processor may be configured to, in case that a usage ratio of an obtained fingerprint satisfies a designated condition, provide a guide to re-register or remove the fingerprint.

According to various embodiments, the processor may be configured to, based on multiple fingerprint recognition results determined as fingerprint mismatches in the touch history, provide a guide enabling improvement of a match rate of fingerprint recognition.

According to various embodiments, the processor may be configured to, based on multiple fingerprint recognition results determined as fingerprint mismatches in the touch history, in case that a ratio at which touch inputs deviating from a position of the fingerprint sensor are received satisfies a designated condition, provide a guide to touch a center of the display.

According to various embodiments, the processor may be configured to, based on multiple fingerprint recognition results determined as fingerprint mismatches in the touch history, in case that a case where the touch history is received on a position of the fingerprint sensor but is determined as a fingerprint mismatch satisfies a designated condition, provide a guide to re-register the fingerprint.

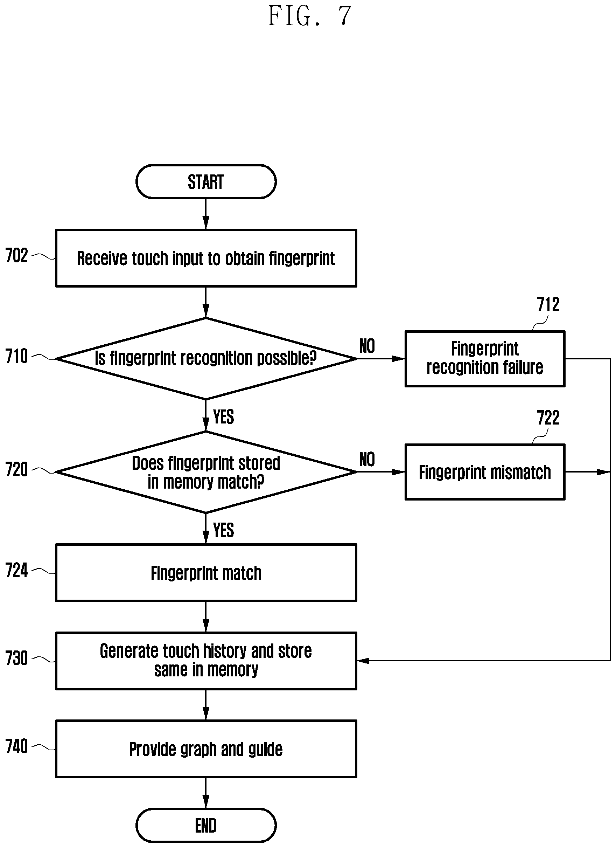

FIG. 7 is a flowchart of a touch method guide of an electronic device according to various embodiments.

A method illustrated in FIG. 7 may be performed by an electronic device (e.g., the electronic device 101 in FIG. 1 and the electronic device 200 in FIG. 2) described with reference to FIG. 1 to FIG. 6, and in the following description, a description of technical features described above will be omitted.

According to various embodiments, the electronic device may store, in a memory (e.g., the memory 240 in FIG. 2), a fingerprint to be compared with an input fingerprint. The electronic device may store a fingerprint corresponding to at least one finger, and then compare an obtained fingerprint with the pre-stored at least one fingerprint to identify whether the fingerprints match each other. According to an embodiment, a maximum number of pre-registered fingerprints storable by the electronic device may be limited.

According to various embodiments, in operation 702, the electronic device may receive a touch input to obtain a fingerprint. According to an embodiment, a display (e.g., the display 220 in FIG. 2) may include a touch sensor. The touch sensor may receive a touch input on the display. The electronic device may obtain information indicating that a touch input has been received, from the touch sensor. According to an embodiment, a fingerprint sensor (e.g., the fingerprint sensor 230 in FIG. 2) may be embedded in the display (e.g., in-display fingerprint sensor), and may be disposed in an area of the display. According to an embodiment, the display may include multiple cell areas, and the fingerprint sensor may be positioned in an area overlapping at least one cell.

According to various embodiments, in operation 710, the electronic device may determine whether a fingerprint is recognizable. According to various embodiments, the electronic device may fail to recognize an input fingerprint corresponding to a touch input. For example, when the electronic device fails to obtain a fingerprint image having a size required for recognizing a fingerprint, the electronic device may determine that the electronic device has failed to recognize a fingerprint from the touch input, and determine a fingerprint recognition failure as a result for the touch input.

According to various embodiments, in operation 712, when a fingerprint is not recognizable, the electronic device may determine a fingerprint recognition failure. According to an embodiment, the electronic device may determine a fingerprint recognition failure when a touch input occurs on a part of the fingerprint sensor. For example, when a touch input occurs across a cell where the fingerprint sensor is positioned and a cell where the fingerprint sensor not positioned, the electronic device may fail to recognize a fingerprint.

According to another embodiment, the electronic device may determine a fingerprint recognition failure when an image of an obtained input fingerprint has a size smaller than a size required for comparison with a registered fingerprint stored in the memory. The electronic device may determine, based on the size of a registered fingerprint stored in the memory, a minimum size of an input fingerprint required for identifying whether the input fingerprint matches the registered fingerprint. If the size of an input fingerprint is smaller than a determined minimum size, the electronic device may fail to recognize a fingerprint of a corresponding touch input.

According to another embodiment, the electronic device may determine a fingerprint recognition failure when an input fingerprint has a lot of noise. For example, when there are many foreign materials covering a finger with which a user touches the display for fingerprint recognition, the electronic device may fail to obtain a clean fingerprint image. When an image having a low resolution is obtained, the electronic device may determine a fingerprint recognition failure for a corresponding touch input.

According to another embodiment, the electronic device may determine a fingerprint recognition failure when a finger touching the display is wet. For example, when there is water on a finger with which a user touches the display for fingerprint recognition, the electronic device may fail to obtain a clean fingerprint image. When an image having a low resolution is obtained, the electronic device may determine a fingerprint recognition failure for a corresponding touch input.

According to another embodiment, the electronic device may determine a fingerprint recognition failure when the ridges and valleys of an input fingerprint are undistinguishable. For example, when a user puts a finger on the display too lightly or does not sufficiently make contact onto the display with a finger, an image of a fingerprint obtained by the electronic device is too faint and thus the electronic device may fail to recognize the ridges and valleys of the fingerprint. When an obtained image of a fingerprint is too faint or dark, the electronic device may determine a fingerprint recognition failure for a corresponding touch input.

According to various embodiments, in operation 720, the electronic device may determine whether an input fingerprint corresponding to a touch input matches a registered fingerprint pre-registered in the memory. The electronic device may compare a registered fingerprint stored in the memory with a fingerprint of a touch input. Only when a fingerprint of a generated touch input is normally obtained, the electronic device may compare a registered fingerprint with the input fingerprint. For example, the electronic device may compare a registered fingerprint with an input fingerprint when a touch input occurs in an area overlapping the fingerprint sensor, the input fingerprint having a size greater than a minimum size for identifying whether the input fingerprint matches the registered fingerprint is obtained, the input fingerprint has no noise, and an image of the input fingerprint that is clear enough to identify ridges and valleys is obtained.

According to various embodiments, in operation 722, the electronic device may determine a fingerprint mismatch when a fingerprint stored in the memory differs from a fingerprint of a touch input. When a match rate between an input fingerprint and a registered fingerprint is smaller than a predetermined value, the electronic device may determine that the two fingerprints do not match.

According to various embodiments, in operation 724, the electronic device may determine a fingerprint match when a fingerprint stored in the memory matches a fingerprint of a touch input. When a match rate between an input fingerprint and a registered fingerprint is equal to or greater than a predetermined value (e.g., 80 % or greater), the electronic device may determine that the two fingerprints match. For example, when the electronic device stored a registered fingerprint, information on the entire area of the fingerprint was stored, but only an area of the registered fingerprint may be received through a currently received touch input. In a case where an image of an area of a registered fingerprint is received, when the electronic device compares the area of the registered fingerprint corresponding to an input fingerprint with data of the input fingerprint, and a match rate therebetween is equal to or greater than a predetermined value, the electronic device may determine that the two fingerprints match.

According to various embodiments, in operation 730, the electronic device may generate a touch history and store same in the memory. According to various embodiments, the electronic device may map information on each case where a fingerprint recognition failure, a fingerprint match, or a fingerprint mismatch has occurred, to information on an area where a corresponding touch has occurred, so as to generate a touch history and store same in the memory. According to an embodiment, touch map information may further include an icon indicating the fingerprint sensor. For example, the electronic device may display an icon indicating the fingerprint sensor in the center of a touch map in order to indicate a position where accumulated touch inputs of a user are input, based the fingerprint sensor. According to an embodiment, the electronic device may generate a touch history further including a time at which a touch input is received. According to an embodiment, when a fingerprint recognition failure occurs, the electronic device may generate a touch history including a reason why the fingerprint recognition failure has occurred. For example, when a touch input occurs from a part of the fingerprint sensor and thus fingerprint recognition fails, the electronic device may generate a touch history by mapping touch map information indicating a position where the touch input has occurred, and a reason indicating that the touch input has occurred from a part of the fingerprint sensor and thus fingerprint recognition has failed.

According to various embodiments, the electronic device may analyze a reason why fingerprint recognition has failed, and classify, into types, respective reasons why fingerprint recognition failures have occurred. For example, a type in which fingerprint recognition failure occurs may be classified into a first type and a second type, and the electronic device may generate information on ratios of the first type and the second type among all fingerprint recognition failure cases. According to an embodiment, when a reason for a currently occurred recognition failure is different from the reasons for previously occurred recognition failures, the electronic device may classify the failure into a new type.

According to various embodiments, when a fingerprint match occurs, the electronic device may generate a touch history including the type of an input fingerprint, touch map information, and a usage ratio of a fingerprint. For example, when a first fingerprint, a second fingerprint, and a third fingerprint are pre-registered in the memory, the electronic device may determine whether an input fingerprint corresponds to a type among the first fingerprint, the second fingerprint, and the third fingerprint, and generate information on ratios of the fingerprints in a fingerprint match case.

According to various embodiments, in operation 740, the electronic device may provide a graph and a guide based on a touch history. According to an embodiment, the electronic device may execute a predetermined application, based on a user input, and provide a graph for guiding a user on how to touch, to an execution screen of the executed application. According to an embodiment, the electronic device may generate a graph, based on ratios at which fingerprint matches, fingerprint mismatches, and fingerprint recognition failures have occurred, based on all accumulated fingerprint recognition attempts. For example, among all attempted fingerprint recognition, a fingerprint match may occur at a first ratio, a fingerprint mismatch may occur at a second ratio, and a fingerprint recognition failure may occur at a third ratio. The electronic device may generate a graph by mapping fingerprint match to the first ratio, fingerprint mismatch to the second ratio, and fingerprint recognition failure to information on the third ratio, respectively. According to an embodiment, the sum of the first ratio, the second ratio, and the third ratio may be 100%.

According to various embodiments, the electronic device may generate a graph of classifying reasons why fingerprint recognition has failed, into types in a fingerprint recognition failure case. For example, the electronic device may generate and provide a graph of mapping a first type, a second type, and a third type to respective ratios at which the types have occurred. According to an embodiment, the electronic device may display a bar graph having a length proportional to the occurrence ratio of each recognition failure type, and provide a detailed description of a reason why a failure of the type has occurred, based on a user input for the bar graph. For example, the electronic device may generate a first bar graph having a length proportional to a first ratio at which first type recognition failures have occurred, and a second bar graph having a length proportional to a second ratio at which second type recognition failures have occurred. The electronic device may provide a description of a reason why a first type recognition failure has occurred, based on a user input for the first bar graph, and provide a description of a reason why a second type recognition failure has occurred, based on a user input for the second bar graph. According to an embodiment, the electronic device may provide touch map information accumulated for each recognition failure type together.

According to various embodiments, the electronic device may generate a graph of representing ratios of input fingerprints by types when a fingerprint match occurs. For example, the electronic device may generate a graph based on a ratio at which each fingerprint is input, among a first fingerprint, a second fingerprint, and a third fingerprint pre-registered in the memory. For example, the electronic device may generate a bar graph having a length proportional to a ratio at which each fingerprint is input. The electronic device may generate a first bar graph proportional to a ratio at which the first fingerprint is input, a second bar graph proportional to a ratio at which the second fingerprint is input, and a third bar graph proportional to a ratio at which the third fingerprint is input. According to an embodiment, the electronic device may individually provide touch map information when a corresponding type of fingerprint is used to touch, based on a user input for each bar graph. For example, in a case where a user touches the first bar graph, the electronic device may provide a first touch map obtained by accumulation when the first fingerprint is input, and in a case where a user touches a second bar graph, the electronic device may provide the second touch map obtained by accumulation when the second fingerprint is input.

According to various embodiments, when a fingerprint having a usage ratio smaller than a predetermined value (e.g., 10%) is selected, the electronic device may provide a re-registration or removal guide for the fingerprint. The electronic device may determine a ratio for determining whether to provide a re-registration or removal guide. According to an embodiment, the electronic device may provide a re-registration or removal guide, based on a ratio of fingerprint usage among all fingerprint recognition attempts during a predetermined period.

According to various embodiments, the electronic device may provide a guide for correcting a fingerprint mismatch together with touch map information when the fingerprint mismatch occurs. For example, even though a touch input is received in an area overlapping with the fingerprint sensor, when a ratio at which fingerprint mismatches have occurred is high, the electronic device may determine that a registered fingerprint needs to be updated and guide a user to re-register the fingerprint. On the contrary, when a touch input is received on a position deviating from an area where the fingerprint sensor is located, the electronic device may guide a user to touch a center part of the fingerprint sensor.

A touch guide method of an electronic device (e.g., the electronic device 200 in FIG. 2) according to various embodiments may include receiving a user's touch input on a display (e.g., the display 220 in FIG. 2), obtaining a fingerprint of the touch input by using a fingerprint sensor (e.g., the fingerprint sensor 230 in FIG. 2), in case that the fingerprint of the touch input is not recognizable, determining a fingerprint recognition failure, in response to recognition of the fingerprint of the touch input, determining a fingerprint match in case that a fingerprint stored in a memory (e.g., the memory 240 in FIG. 2) matches the fingerprint of the touch input, and determining a fingerprint mismatch in case that the fingerprint stored in the memory does not match the fingerprint of the touch input, and generating a touch history obtained by mapping the touch input to a fingerprint recognition result for the touch input, and storing the touch history in the memory.

According to various embodiments, the method may further include generating a graph (e.g., the graph 410 in FIG. 4A) including information on accumulated touch inputs, based on the touch history, and providing a guide enabling improvement of a recognition rate of a touch input, based on the graph.

According to various embodiments, the generating of the graph may further include, based on the touch history, generating a graph indicating ratios at which fingerprint matches, fingerprint mismatches, and fingerprint recognition failures have occurred, and outputting the graph on the display.

According to various embodiments, the generating of the graph may further include, based on the touch history, generating a graph of accumulating positions of areas where touch inputs are received, and representing the accumulated positions.

According to various embodiments, the providing of the guide may further include, in case that a usage ratio of an obtained fingerprint satisfies a designated condition, providing a guide to re-register or remove the fingerprint.

According to various embodiments, the providing of the guide may further include, based on multiple fingerprint recognition results determined as fingerprint mismatches in the touch history, providing a guide enabling improvement of a match rate of fingerprint recognition.

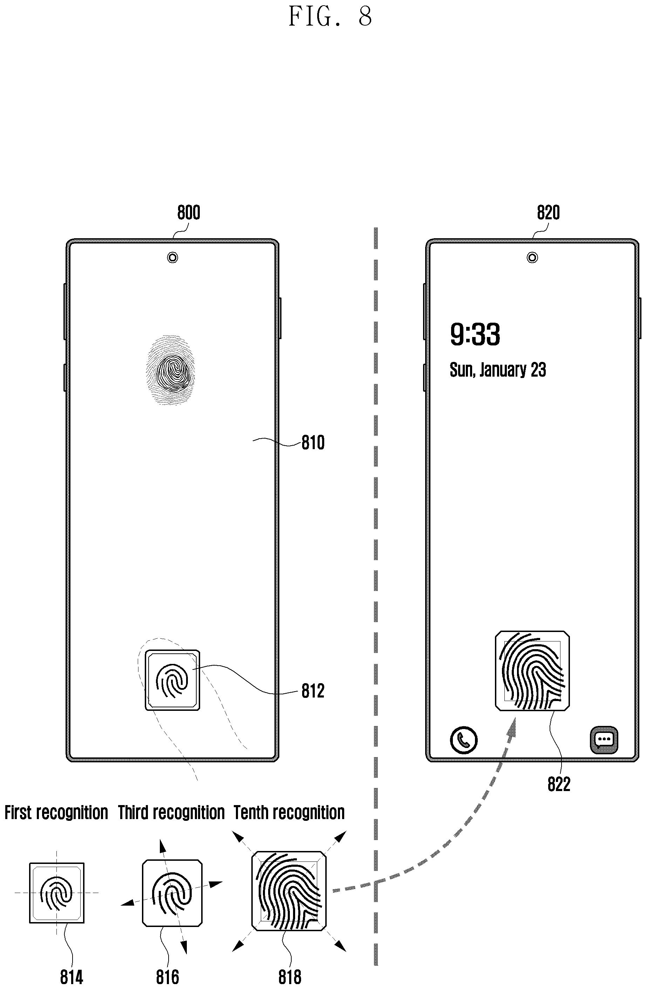

FIG. 8 illustrates an embodiment in which an electronic device adaptively displays a fingerprint icon, based on the type and size of a user's fingerprint according to various embodiments.

Referring to FIG. 8, a processor may differently display a fingerprint icon 812 according to the number of times of fingerprint recognition on a fingerprint registration screen 810. The processor may provide a fingerprint registration guide to guide a user to repeatedly put a finger on the fingerprint icon 812 on a display of an electronic device 800 (e.g., the electronic device 200 in FIG. 2). The processor may repeatedly perform fingerprint recognition to learn the shape of a user's fingerprint. The processor may display the fingerprint icon 812 by using the shape of a user's fingerprint according to repetitive fingerprint recognition. For example, when a user's fingerprint is recognized one time, the processor may display a fingerprint icon of a first shape 814, when a user's fingerprint is recognized three times, the processor may display a fingerprint icon of a second shape 816, and when a user's fingerprint is recognized ten times, the processor may display a fingerprint icon of a third shape 818. According to an embodiment, the processor may generate the fingerprint icon 812, the size of which has been changed, based on the size of a user's finger according to increment in the number of times of fingerprint recognition. According to an embodiment, the fingerprint icon 812 may include a fixed fingerprint sensing area and a variable fingerprint guide UI area according to a user touch input. The shape of the fingerprint icon changed by the processor by recognizing a user's fingerprint is not limited to the shape illustrated in the drawing, and the processor may generate fingerprint icons corresponding to various fingerprint shapes.

According to various embodiments, the processor may determine the shape of a fingerprint icon 822 on a lock screen 820, based on information on the shape of a fingerprint obtained in a fingerprint registration stage. For example, when the processor recognizes a fingerprint one time in a fingerprint registration stage, the processor may output a fingerprint icon of the first shape 814 on the lock screen 820, when the processor recognizes a fingerprint two times, the processor may output a fingerprint icon of the second shape 816 on the lock screen 820, and when the processor recognizes a fingerprint three times, the processor may output a fingerprint icon of the third shape 818 on the lock screen 820.

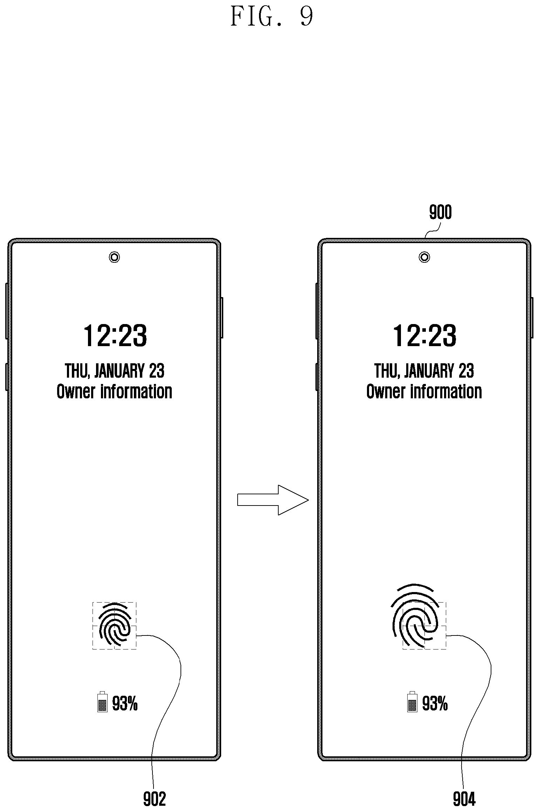

FIG. 9 illustrates an embodiment that provides a user-customized fingerprint icon of an electronic device 900 (e.g., the electronic device 200 in FIG. 2) according to various embodiments.

Referring to FIG. 9, a processor may differently display a fingerprint icon on a lock screen according to a user's fingerprint input pattern (as indicated by reference numerals 902 and 904). For example, the processor may determine the size and position of a fingerprint icon, based on a user's fingerprint input pattern.

According to various embodiments, the processor may learn a user's fingerprint input pattern. For example, the processor may learn which direction a part touched by a user is located in, with reference to the center of a fingerprint icon. For example, the processor may learn that there is a pattern of a user touching a bottom-right part of a fingerprint icon. If a user touches a bottom-right part of a fingerprint icon, a touch input deviates from the center of a fixed fingerprint sensing area and thus the probability that a fingerprint mismatch or a fingerprint recognition failure may occur may be increased. In order to prevent a fingerprint mismatch or a fingerprint recognition failure, the processor may determine the size and position of a fingerprint icon, based on a user's fingerprint input pattern. For example, the processor may enlarge, to the upper left, the fingerprint icon positioned at the original central position thereof and display the enlarged icon (as indicated by reference numeral 904), so as to induce a user's fingerprint input position toward the center. The processor may induce a user to precisely touch a fixed fingerprint sensing area by adjusting the position and/or size of the center of a fingerprint icon.

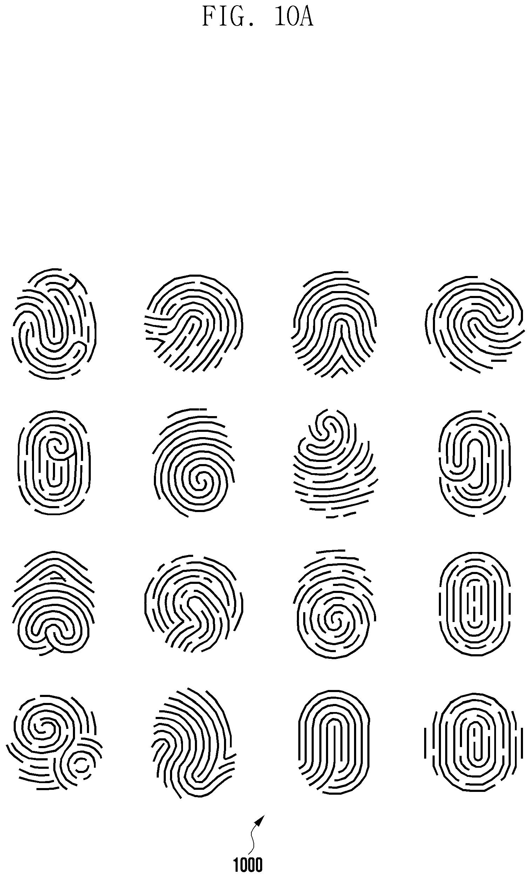

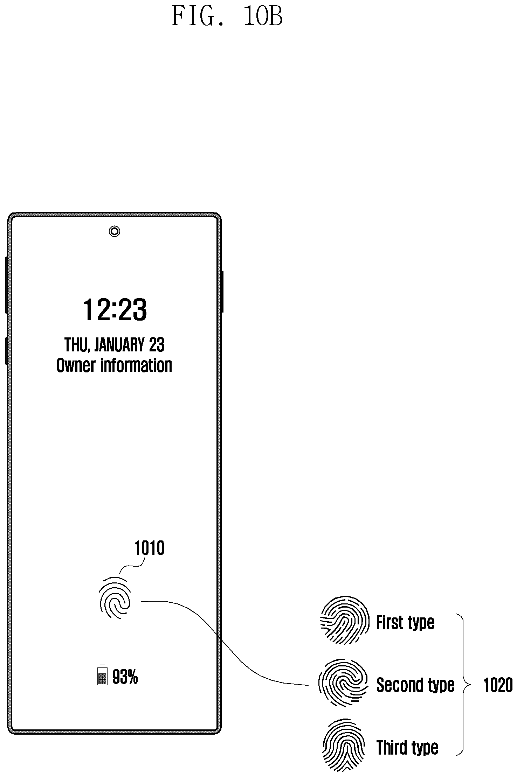

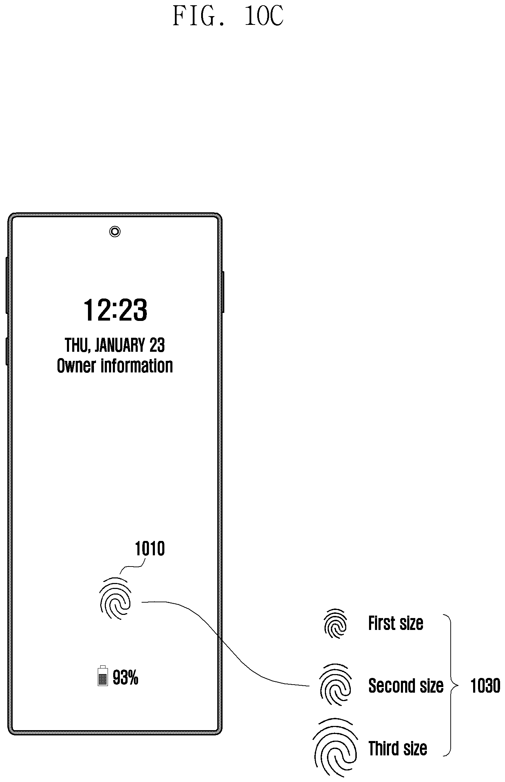

FIGS. 10A, 10B, and 10C illustrate embodiments in which an electronic device adaptively displays a fingerprint icon according to the type and size of a fingerprint according to various embodiments.

Referring to FIG. 10A, a user's fingerprint shape may include various types (as indicated by reference numeral 1000). For example, there may be various fingerprints, such as bow-shaped patterns (arch-shaped patterns), hoof-shaped patterns (reverse-loop patterns), double loop patterns, and whorl patterns (spiral patterns). A user's fingerprint shape may vary according to the type of the fingerprint. For example, a whorl pattern may be a spiral shape centered around the middle of the fingerprint, and a bow-shaped pattern may have a shape in which bow-shaped lines in the fingerprint are stacked in layers.

Referring to FIG. 10B, the processor may determine the shape of a fingerprint icon 1010, based on a type 1020 of a user's fingerprint. The processor may determine the type 1020 of a user's fingerprint in a fingerprint registration process, and output the fingerprint icon 1010 on a display, based on the determined type 1020 of the fingerprint. For example, when a user's fingerprint identified in a fingerprint registration stage is a first type, the processor may output a fingerprint icon having a shape of the first type on a lock screen, and when a user's fingerprint identified in a fingerprint registration stage is a second type, the processor may output a fingerprint icon having a shape of the second type on a lock screen. The shape of the fingerprint icon 1010 outputtable by the processor is not limited to the shape illustrated in the drawing, and may vary according to a user's fingerprint shape.

Referring to FIG. 10C, the processor may determine the size of the fingerprint icon 1010, based on a size 1030 of a user's fingerprint. The processor may determine the size 1030 of a user's fingerprint in a fingerprint registration process, and output the fingerprint icon 1010 on a display, based on the determined size 1030 of the fingerprint. For example, when a user's fingerprint identified in a fingerprint registration stage is a first size, the processor may output a fingerprint icon having the first size on a lock screen, and when a user's fingerprint identified in a fingerprint registration stage is a second size, the processor may output a fingerprint icon having the second size on a lock screen. The size of the fingerprint icon 1010 outputtable by the processor is not limited to the sizes illustrated in the drawing, and may vary according to a user's fingerprint size.

## Claims

1. An electronic device comprising:
a display;
a fingerprint sensor;
a memory; and
a processor operatively connected to the display, the fingerprint sensor, and the memory,
wherein the processor is configured to:
receive a user's touch input on the display;
obtain a fingerprint of the touch input by using the fingerprint sensor;
in case that the fingerprint of the touch input is not recognizable, determine a fingerprint recognition failure;
in response to recognition of the fingerprint of the touch input, determine a fingerprint match in case that a fingerprint stored in the memory matches the fingerprint of the touch input, and determine a fingerprint mismatch in case that the fingerprint stored in the memory does not match the fingerprint of the touch input; and
generate a touch history obtained by mapping the touch input to a fingerprint recognition result for the touch input, and store the touch history in the memory.

2. The electronic device of claim 1, wherein the processor is configured to:
generate a graph including information on accumulated touch inputs, based on the touch history; and
provide a guide enabling improvement of a recognition rate of a touch input, based on the graph.

3. The electronic device of claim 2, wherein the processor is configured to:
based on the touch history, generate a graph indicating ratios at which fingerprint matches, fingerprint mismatches, and fingerprint recognition failures have occurred; and
output the graph on the display.

4. The electronic device of claim 3, wherein the processor is configured to:
execute a predetermined application, based on a user input; and
output the graph on the display, based on a user input for the application.

5. The electronic device of claim 1, wherein the display comprises multiple cells, and
wherein the processor is configured to:
select at least one cell corresponding to the touch input; and
in response to a user's touch input received on the at least one cell, obtain information on an area where the touch input is received.

6. The electronic device of claim 5, wherein the processor is configured to map a time at which the touch input is received and the area where the touch input is received, to the fingerprint recognition result, and store the mapped time, area, and result in the memory.

7. The electronic device of claim 1, wherein the processor is configured to, in case that a size of the fingerprint of the touch input satisfies a designated condition, determine a fingerprint recognition failure.

8. The electronic device of claim 2, wherein the processor is configured to:
based on the touch history, in case that a fingerprint recognition result of a touch input is determined as a fingerprint match, identify ratios at which a first fingerprint and a second fingerprint are obtained; and
output, on the display, a graph including information on a first ratio at which the first fingerprint is obtained and a second ratio at which the second fingerprint is obtained.

9. The electronic device of claim 2, wherein the processor is configured to, based on the touch history, generate a graph of accumulating positions of areas where touch inputs are received, and representing the accumulated positions.

10. The electronic device of claim 9, wherein the processor is configured to accumulate positions of areas where touch inputs are received, based on a graphic object indicating the fingerprint sensor, and represent the accumulated positions

11. The electronic device of claim 2, wherein the processor is configured to, in case that a usage ratio of an obtained fingerprint satisfies a designated condition, provide a guide to re-register or remove the fingerprint.

12. The electronic device of claim 2, wherein the processor is configured to, based on multiple fingerprint recognition results determined as fingerprint mismatches in the touch history, provide a guide enabling improvement of a match rate of fingerprint recognition.

13. The electronic device of claim 12, wherein the processor is configured to, based on multiple fingerprint recognition results determined as fingerprint mismatches in the touch history, in case that a ratio at which touch inputs deviating from a position of the fingerprint sensor are received satisfies a designated condition, provide a guide to touch a center of the display.

14. The electronic device of claim 12, wherein the processor is configured to, based on multiple fingerprint recognition results determined as fingerprint mismatches in the touch history, in case that a case where the touch history is received on a position of the fingerprint sensor but is determined as a fingerprint mismatch satisfies a designated condition, provide a guide to re-register the fingerprint.

15. A touch guide method of an electronic device, the method comprising:
receiving a user's touch input on a display;
obtaining a fingerprint of the touch input by using a fingerprint sensor;
in case that the fingerprint of the touch input is not recognizable, determining a fingerprint recognition failure;
in response to recognition of the fingerprint of the touch input, determining a fingerprint match in case that a fingerprint stored in a memory matches the fingerprint of the touch input, and determining a fingerprint mismatch in case that the fingerprint stored in the memory does not match the fingerprint of the touch input; and
generating a touch history obtained by mapping the touch input to a fingerprint recognition result for the touch input, and storing the touch history in the memory.
